# EUROPEAN PATENT APPLICATION

(11) **EP 3 375 927 A1**
(43) Date of publication of application: **19.09.2018**
(21) Application number: 16863656.1
(22) Date of filing: 10.11.2016
(51) Int. Cl.: D06F 37/20, D06F 23/06, H02K 33/18

(54) **WASHING MACHINE**

(30) Priority: 10.11.2015 JP 2015220529
(71) Applicant: Qingdao Haier Washing Machine Co., Ltd., Shandong 266101 (CN); Aqua Co., Ltd., Chiyoda-ku Tokyo 100-0005 (JP)
(72) Inventor: NAKANISHI, Takashi, Tokyo 100-0005 (JP); KAWAMURA, Tamotsu, Tokyo 100-0005 (JP)
(74) Representative: Pfenning, Meinig & Partner mbB
(86) International application number: PCT/CN2016/105284
(87) International publication number: WO 2017/080480

(57) **Abstract**

Provided is a washing machine including a washing tub (3) that is rotatable in a manner of intersecting with a vertical direction (Z), a supporting member (4) rotatably supporting the washing tub (3) and a linear motor (32) having a stator (41) and a rotor (42). The stator (41) has one of a coil (44) and a permanent magnet (45), is fixed to the supporting member (4) and extends in a predetermined direction (S). The rotor (42) has the other one of the coil (44) and the permanent magnet (45), is fitted with the stator in a non-contact state so as to be movable along the predetermined direction (S), and is connected to the washing tub (3). The linear motor (32) rotates the washing tub (3) by means of a movement of the washing tub (3). The washing machine is provided for suppressing failures of a driving mechanism for rotating the washing tub.

## Description

### TECHNICAL FIELD

The present disclosure relates to a washing machine.

### BACKGROUND

In a washing and drying machine described in the following Patent Literature 1, an outer tub portion incorporating a rotating tub portion into which laundry is loaded is supported by a rotation supporting plate via an inclined rotation supporting shaft. The rotation supporting plate is supported by an outer frame of the washing and drying machine via a hanger rod. A rotating wire mounting portion is provided in the outer tub portion, and the wire connected to the rotating wire mounting portion is wound around a winding drum of the inclined rotation motor provided on the outer frame. As the wire rises or falls in accordance with the rotation of the inclined rotation motor, the outer tub portion rotates around the inclined rotation supporting shaft in an inclined manner. Thus, when the laundry is introduced into the rotation tub, the outer tub is inclined sideways, and when washing, rinsing or dehydrating is performed, the outer tub can be erected in the vertical direction.

The washing and drying machine described in Patent Document 1 has following hidden troubles: the washing and drying machine generates vibrations during operation, and a failure occurs after a driving mechanism for rotating the outer tub portion, such as a rotating wire attachment portion, a wire, and an inclined rotation motor, bears the impact of the vibrations.

### Current Technical Literature

### Patent Literature

Patent Literature 1: Japanese Laid-Open Patent Publication No. 4-166196

### SUMMARY

### Problems to be solved by the disclosure

The present disclosure has been made based on the above underground, and it is an object of the present disclosure to provide a washing machine for suppressing a failure of a driving member for rotating a washing tub so as to intersect with the vertical direction.

### Solution to solve the problems

The present disclosure relates to a washing machine, which includes a washing tub for accommodating laundry and being rotatable in a manner of intersecting with a vertical direction; a supporting member for rotatably supporting the washing tub, and a linear motor having a stator and a rotor and for rotating the washing tub by means of a movement of the rotor, wherein the stator has one of a coil and a permanent magnet, and is fixed to the supporting member and extends in a predetermined direction; and the rotor has another of the coil and the permanent magnet, is fitted with the stator in a non-contact state so as to be movable along the predetermined direction, and is connected to the washing tub.

Further, the predetermined direction is a linear direction that intersects the rotation direction of the washing tub.

Further, the predetermined direction is a direction curved along a rotation direction of the washing tub.

Further, the washing machine includes a locking portion for locking a rotation of the washing tub or releasing the locking thereof.

Further, the washing machine includes a damper portion that absorbs an impact caused by the rotation of the washing tub by contacting the washing tub or contacting a member interlocking with the rotation of the washing tub in the washing machine.

### Effects of the disclosure

According to the present disclosure, in the washing machine, the washing tub is rotatably supported by the supporting member so as to intersect with the vertical direction. The washing machine includes a linear motor including a stator and a rotor. The stator has one of a coil and a permanent magnet, is fixed to the supporting member and extends in a predetermined direction. The rotor has another of the coil and the permanent magnet, is fitted with the stator in a non-contact state so as to be movable along the predetermined direction, and is connected to the washing tub. The linear motor rotates the washing tub by means of a movement of the rotor.

In this manner, in the washing machine, the driving mechanism for rotating the washing tub is constituted by a linear motor. In the linear motor, the stator and the rotor are not in contact with each other. As a result, an abrasion of the stator or the rotor caused by the movement of the rotor can be suppressed. In addition, since there is a gap between the stator and the rotor in a non-contact state, the vibration of the washing tub is absorbed by the gap, so that the damages caused by the vibrations of a connection portion of the rotor and the stator can be suppressed. Therefore, it is possible to suppress the failure of the driving mechanism for rotating the washing tub.

Further, according to the present disclosure, when the stator extends in a predetermined linear direction intersecting with the rotation direction of the washing tub, the linear motor changes a force enabling the rotor to linearly move in a predetermined direction into a force toward a rotation direction and transmits it to the washing tub, so that the washing tub can be smoothly rotated.

Further, according to the present disclosure, when the stator extends in a predetermined direction curved along the rotation direction of the washing tub, the linear motor does not change a force enabling the rotor to move in a circular arc in the rotational direction into a force in another direction, but directly transmits the force to the washing tub so that the washing tub can be smoothly rotated.

Further, according to the present disclosure, the rotation angle of the washing tub can be maintained at a predetermined value by locking the rotation of the washing tub via a locking portion. On the other hand, when the locking portion releases the locking of the rotation of the washing tub, the rotation angle of the washing tub can be changed by rotating the washing tub again.

Further, according to the present disclosure, the damper portion contacts the washing tub or a member interlocking with the rotation of the washing tub in the washing tub, thereby absorbing the impact caused by the rotation of the washing tub. Thus, it is possible to prevent the member related to the rotation of the washing tub in the washing machine from failing due to the impact. Further, in a state in which the rotation of the washing tub is stopped, even if the linear motor is not energized, the state in which the rotation of the washing tub is stopped can be maintained by bringing the damper portion into contact with the washing tub or the member. Therefore, it is possible to reduce the power consumption.

### BRIEF DESCRIPTION OF DRAWINGS

FIG. 1 is a schematic perspective view of a washing machine according to one embodiment of the present disclosure;
FIG. 2 is a schematic left side view of the washing machine;
FIG. 3 is a perspective view of a driving mechanism included in the washing machine;
FIG. 4 is a left side view of the driving mechanism;
FIG. 5 is a cross-sectional step view of the driving mechanism taken along line A-A in FIG. 4;
FIG. 6 is a left side view of a main portion of a washing machine according to a first modified example;
FIG. 7 is a cross-sectional view taken along the line B-B in FIG. 6;
FIG. 8 is a schematic left side view of a washing machine according to the first modified example; and
FIG. 9 is a schematic left side view of a washing machine according to a second modified example.

### A list of reference numerals

1: Washing machine; 3: Washing tub; 4: Supporting member; 6: Rotating portion; 7: Locking portion; 32: Linear motor; 41: Stator; 42, Rotor; 44: Coil; 45: Permanent magnet; 70: Damper portion; K: Rotation direction; S: Predetermined direction; Z: Vertical direction.

### DETAILED DESCRIPTION

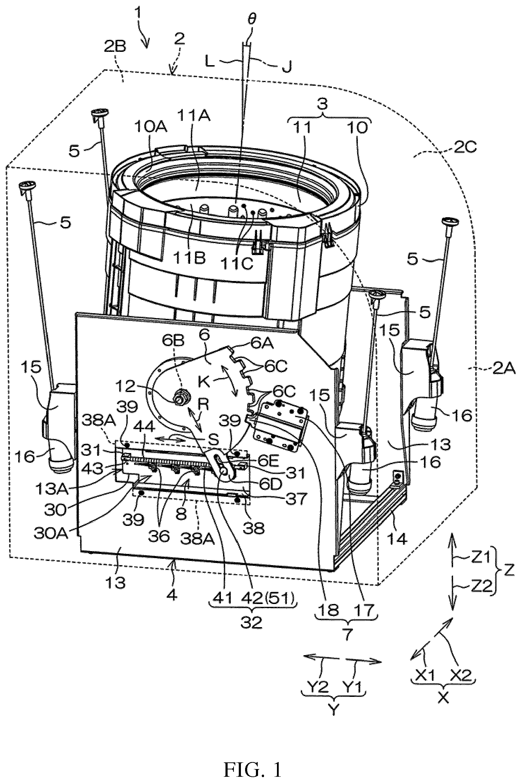

Hereinafter, embodiments of the present disclosure will be described in detail with reference to the drawings. FIG. 1 is a schematic perspective view of a washing machine 1 according to one embodiment of the present disclosure. The vertical direction in FIG. 1 is referred to as a vertical direction Z of the washing machine 1, the horizontal direction in FIG. 1 is referred to as a front-rear direction Y of the washing machine 1, and the direction substantially orthogonal to the paper surface of FIG. 1 is referred to as a left-right direction X. The vertical direction Z is also a vertical direction. In the vertical direction Z, the upper side is referred to as an upper side Z1 and the lower side is referred to as a lower side Z2. In the front-rear direction Y, the right side in FIG. 1 is referred to as a front side Y1, and the left side in FIG. 1 is referred to as a rear side Y2. In the left-right direction X, the surface side of the paper surface of FIG. 1 is referred to as a left side X1, and the inner side of the paper surface of FIG. 1 is referred to as a right side X2.

The washing machine 1 includes a washing and drying machine having a drying function. The washing machine 1 will be described by taking a washing machine as an example, in which the drying function is omitted and only a washing operation is executed. The washing operation includes a washing step, a rinsing step and a dehydration step. The washing machine 1 includes a housing 2, a washing tub 3 provided inside the housing 2, a supporting member 4, a hanger rod 5, a rotating portion 6, a locking portion 7, and a driving mechanism 8.

The housing 2 is made of, for example, metal, and is formed in a box shape. The housing 2 is provided with a connecting surface 2C connecting a front surface 2A and an upper surface 2B. The connecting surface 2C is, for example, an inclined surface descending along with facing the front side Y1. An entrance (not shown) for placing the laundry into and taking it out of the washing machine 1 is formed across the front face 2A and the connecting face 2C.

The washing tub 3 includes an outer tub 10 and an inner tub 11. The outer tub 10 is, for example, made of resin and formed into a bottomed cylindrical shape. An imaginary straight line passing through the circle center of the outer tub 10 is the central axis J of the outer tub 10. In the washing step and the rinsing step, water is stored in the outer tub 10. An opening 10A is formed at the upper end part of the outer tub 10 at the side opposite to the bottom wall (not shown) to allow the laundry to be taken into and out of the washing machine 1 to pass there through. On the left surface and right side surface of the outer tub 10, one metal rotation shaft 12 protruding outward in the left-right direction X is provided. In FIG. 1, only the rotation shaft 12 on the left side X1 is shown. A pair of right and left rotation shafts 12 are provided at the same position when viewed from the left-right direction X.

The inner tub 11 is made of, for example, metal, and is formed into a bottomed cylindrical shape slightly smaller than the outer tub 10 by a loop. The inner tub 11 is provided for accommodating the laundry. An opening 11A through which the laundry contained in the inner tub 11 passes is formed at the upper end part of the inner tub 11 opposite to the bottom wall (not shown). The inner tub 11 is coaxially accommodated in the outer tub 10. Therefore, the central axis of the inner tub 11 is the aforementioned central axis J. When the inner tub 11 is accommodated in the outer tub 10, the opening 11A of the inner tub 11 is arranged inside the opening 10A of the outer tub 10. The opening 10A and the opening 11A face the doorway (not shown) of the housing 2, so that the laundry can be taken into and out of the inner tub 11. A plurality of through holes 11C are formed in the circumferential wall 11B and the bottom wall of the inner tub 11, and the water in the outer tub 10 may flow between the outer tub 10 and the inner tub 11 via these through holes 11C. Therefore, a water level of the outer tub 10 is same with that of the inner tub 11. During the washing operation, the inner tub 11 rotates around the central axis J by receiving a driving force from a motor (not shown) provided in the housing 2.

The supporting member 4 is made of metal, and includes a pair of left and right side plates 13 and a beam member 14 arranged between the lower end parts of these side plates 13. Each of the side plates 13 is formed in a substantially rectangular shape when viewed from the left-right direction X, and is thin in the left-right direction X. A washing tub 3 is disposed between the pair of side plates 13.

In the outer tub 10 of the washing tub 3, the rotation shaft 12 protruding to the left side X1 passes through the side plate 13 at the left side X1, and is rotatably supported by the side plate 13 on the left side X1 via a bearing (not shown). In the outer tub 10, a rotation shaft 12 (not shown) protruding to the right side X2 passes through the side plate 13 at the right side X2, and is rotationally supported by the side plate 13 on the right side X2 via a bearing (not shown). Thus, the washing tub 3 is supported by the supporting member 4, and is rotatable around the rotation shaft 12 so as to intersect with the vertical direction Z. Specifically, along with the rotation of the washing tub 3, the central axis J of the outer tub 10 and the inner tub 11 is inclined in the front-rear direction Y with respect to the vertical direction Z. The rotation direction of the washing tub 3 is referred to as a rotation direction K.

A rotation angle θ of the washing tub 3 with respect to the reference axis L is an acute angle of an intersection angle between the imaginary reference axis L extending along the vertical direction Z and the central axis J. As the rotation angle θ becomes smaller, the washing tub 3 becomes closer to an upright posture, and as the rotation angle θ increases, the washing tub 3 becomes closer to the posture of inclining to the front side Y1 in a manner in which the opening 10A of the outer tub 10 and the opening 11A of the inner tub 11 face the front side Y1. The rotation angle θ can be changed in five stages of 5 degrees, 15 degrees, 30 degrees, 45 degrees, 60 degrees, for example. In this case, as an example applied in the washing machine 1, when the laundry is throwed into the washing tub 3 at a start of the washing operation, the rotation angle θ is set to be 45 degrees so that the laundry can be easily throwed into. When the load amount of the laundry is detected or the water is supplied to the washing tub 3 thereafter, the rotation angle θ is set to be 5 degrees. Then, in the washing step or the rinsing step, in order to promote replacement of the position of the laundry in the inner tub 11, the rotation angle θ is set between 5 degrees and 60 degrees to achieve an effective washing and rinsing.

In the side plate 13 on the left side X1, an opening 13A penetrating the side plate 13 in the left-right direction X is formed in a region at the lower side Z2 of the rotation shaft 12. The opening 13A is formed in a substantially rectangular shape elongated in the front-rear direction Y On the front end edge and the rear end edge of each side plate 13, a receiving portion 15 protruding outward in the front-rear direction Y is provided. The receiving portion 15 may be integrally formed with the side plate 13 or may be attached to the side plate 13 as a separate part made of resin, for example.

The hanger rod 5 is formed in a bar shape having a friction damper 16 at a lower end part thereof. There are four hanger rods 5, and one hanger rod 5 is disposed in each of the four corners in the housing 2 when looking down from the upper side Z1 in the housing 2. These hanger rods 5 are suspended from an upper portion of the housing 2, more specifically, a metal outer frame (not shown) constituting a part of the housing 2. Among the two hanger rods 5 provided at the left side X1 and along a front-rear direction, the lower end part of the hanger rod 5 on the front side Y1 is connected to the receiving portion 15 on the front side Y1 of the side plate 13 on the left side X1, and the lower end part of the hanger rod 5 on the rear side Y2 is connected to the receiving portion 15 on the rear side Y2 of the side plate 13 on the left side X1. Among the two hanger rods 5 provided at the right side X2 and along the front-rear direction, the lower end part of the hanger rod 5 on the front side Y1 is connected to the receiving portion 15 on the front side Y1 of the side plate 13 on the right side X2. The lower end part of the hanger rod 5 (not shown) on the rear side Y2 is connected to the receiving portion 15 (not shown) of the side plate 13 on the right side X2 at the rear side Y2. Thus, the supporting member 4 having the side plate 13, the washing tub 3 supported by the supporting member 4, and the motor (not shown) for rotating the inner tub 11 are elastically supported by the housing 2 via the hanger rod 5.

The rotating portion 6 is a metal plate in a substantially fan-like shape which is thin in a left-right direction X and bulges to the front side Y1 when viewed from the left-right direction X. The rotating portion 6 has an outer peripheral edge 6A formed in an arc shape along the rotation direction K and bulging to the front side Y1. A through hole 6B penetrating the rotating portion 6 in the left-right direction X is formed at a position that coincides with the center of curvature of the outer peripheral edge 6A in the rotating portion 6. A plurality of recessed portions are provided on the outer peripheral edge 6A, and in this case, five recessed portions 6C are formed. These recessed portions 6C are recessed toward the through hole 6B penetrate the rotating portion 6 in the left-right direction X, and are arranged side by side in the rotating direction K. The interval between the adjacent recessed portions 6C may be constant or different according to the position of the rotating portion 6. In this embodiment, in response to the rotation angle θ being set to 5 degrees, 15 degrees, 30 degrees, 45 degrees, and 60 degrees, in the rotating portion 6 in the posture in FIG. 1, the lowest side Z2 and the distance between the two recessed portions 6C positioned thereabove is 10 degrees in terms of the rotation direction K, that is, the angle in the circumferential direction around the through hole 6B, and the interval between the other adjacent recessed portions 6C is uniformly 15 degrees.

The rotating portion 6 is provided at the left side X1 of the side plate 13 on the left side X1. The rotation shaft 12 protruding to the left side X1 and passing through the side plate 13 on the left side X1 in the outer tub 10 of the washing tub 3 is inserted through the through hole 6B of the rotating portion 6, and is fixed to the rotating portion 6. As a result, the rotating portion 6 is connected to the washing tub 3 so as to be integrally rotatable via the rotation shaft 12.

The rotating portion 6 in the posture shown in FIG. 1 is integrally provided with an extension portion 6D protruding to lower side Z2 at the lower end of the outer peripheral edge 6A. More specifically, the extension portion 6D protruding outward in the radial direction R of the rotating portion 6 with the through hole 6 as the center is provided. The extension portion 6D is formed in a plate shape that is elongated in the radial direction R and thin in the left-right direction X. The extension portion 6D is provided with a guide hole 6E that is long in the radial direction R and penetrates the extension 6D in the left-right direction X. Both ends of the guide hole 6E in a longitudinal direction are in a closed state. The guide hole 6E and the opening 13A of the side plate 13 at the left side are at a same position in the vertical direction Z. No matter what value the rotation angle θ is in the range of 5 degrees to 60 degrees, the guide hole 6E always faces the opening 13A from the left side X1.

The locking portion 7 is fixed to the left side surface of the side plate 13 on the left side X1. The locking portion 7 includes a main body portion 17 and a locking claw 18. A brake (not shown) formed by an actuator and the like is provided on the main body portion 17. The locking claw 18 is formed in a convex shape protruding rearwardly Y2 (rearwardly and upwardly, strictly speaking) from the main body portion 17, and is supported by the main body portion 17 so as to be slidable in the front-rear direction Y. Actuation of the brake of the main body portion 17 causes the locking claw 18 to slide between the advanced position advanced to the rearward side Y2 and the retracted position retracted to the frontmost side Y1.

The locking claw 18 of FIG. 1 at in the advanced position. When any one of the recessed portions 6C of the rotating portion 6 and the locking claw 18 are at a same position in the rotation direction K, the locking claw 18 of the locking portion 7 advances to the advanced position, and is inserted into the recessed portion 6C at the same position in the rotation direction K. As a result, the rotations of the rotating portion 6 and the washing tub 3 are locked. Therefore, it is possible to maintain the rotation angle θ of the washing tub 3 at a predetermined value. In this state, when the locking claw 18 retreats to the retracted position, the locking claw 18 is disengaged from the recessed portion 6C, so that the lockings of the rotating portion 6 and the washing tub 3 are released. Therefore, the washing tub 3 is enabled to be rotated again and the rotation angle θ of the washing tub 3 can be changed.

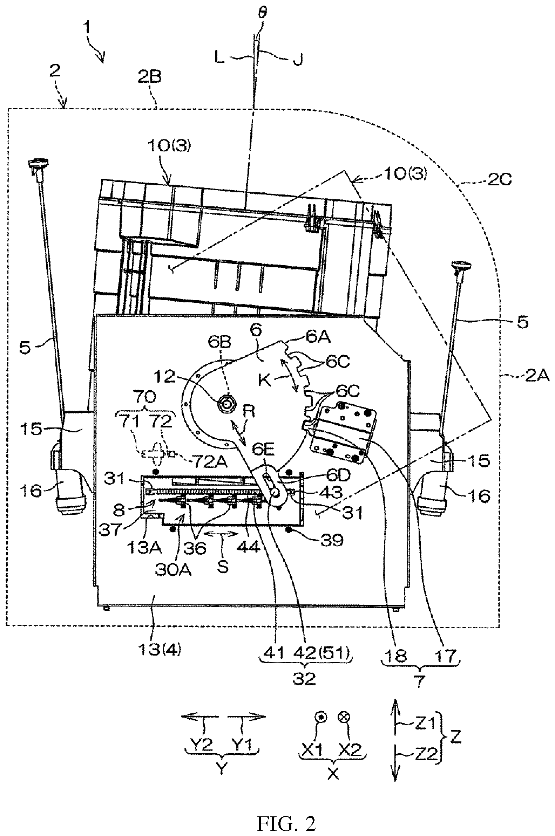

In FIG. 1, the locking claw 18 at the advanced position is fitted into the recessed portion 6C located at the lowest side Z2. At this time, the rotations of the rotating portion 6 and the washing tub 3 are locked in a state in which the rotation angle θ becomes 5 degrees. The rotation angle θ increases as the recessed portion 6C into which the locking claw 18 is fitted into becomes another recessed portion 6C located on the upper side Z1. In a state in which the locking claw 18 is fitted into the recessed portion 6C at the uppermost side Z1, the rotations of the rotating portion 6 and the washing tub 3 are locked in a state that the rotation angle θ reaches 60 degrees. It should be noted that, in FIG. 2, which is a schematic left side view of the washing machine 1, the washing tub 3 is shown by a solid line when the rotation angle θ is 5 degrees, and the main portion of the washing tub 3 is illustrated by a two-dot chain line when the rotation angle θ is 60 degrees.

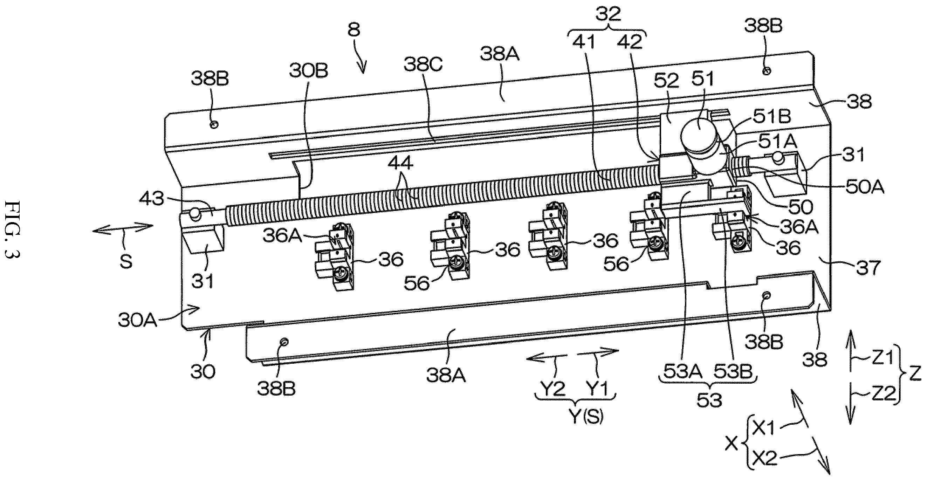

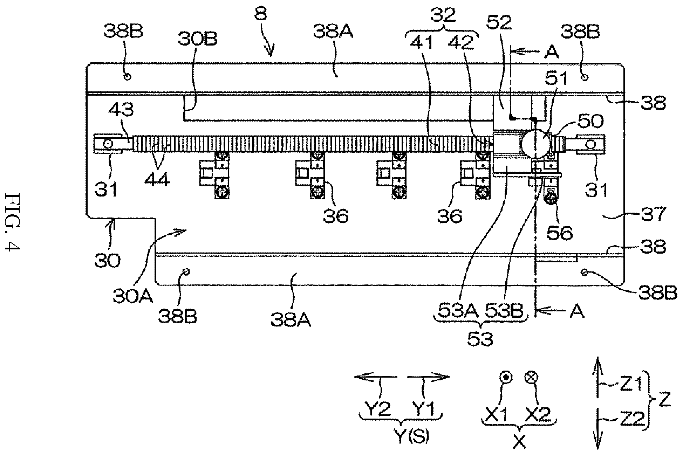

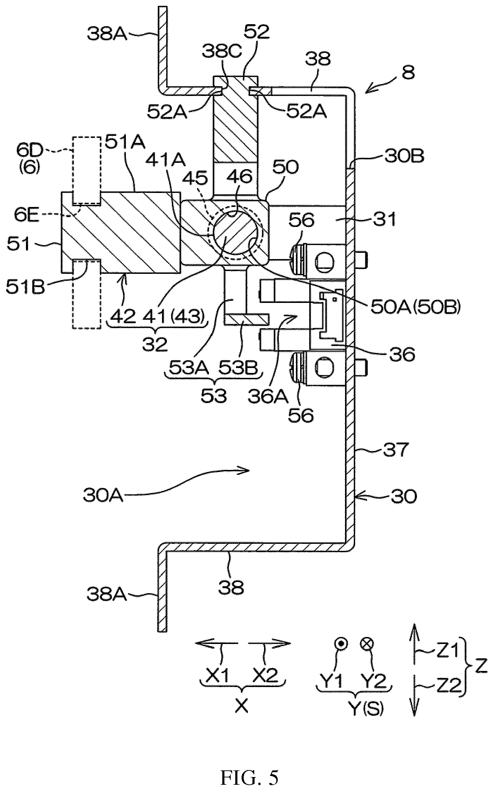

FIG. 3 is a perspective view of a driving mechanism 8. FIG. 4 is a left side view of the driving mechanism 8. FIG. 5 is a cross-sectional step view of the driving mechanism 8 taken along the line A-A of FIG. 4. Referring mainly to FIG. 3, the driving mechanism 8 includes a base portion 30, a supporting portion 31, a linear motor 32 and a sensor 36.

The base portion 30 is formed by bending a metal plate, for example, and integrally includes a vertical wall 37 and a pair of upper and lower transverse walls 38. The vertical wall 37 is formed in a rectangular plate shape that is thin in the left-right direction X and elongated in the front-rear direction Y. The transverse wall 38 is formed in a rectangular plate shape that is thin in the vertical direction Z and elongated in the front-rear direction Y. For the pair of horizontal walls 38, the horizontal wall 38 at the upper side Z1 continuously extends from the entire upper end of the vertical wall 37 to the left side X1, and the horizontal wall 38 at the lower side Z2 continues extends from substantially the entire area of the lower end of the vertical wall 37 to the left side X1.

A left end part of each of the horizontal walls 38, as a flange portion 38A, is formed by bending substantially at a right angle outward in the vertical direction Z over the entire area in the front-rear direction Y. The flange portion 38A of the horizontal wall 38 at the upper side Z1 is formed by being bent to the upper side Z1, and the flange portion 38A of the horizontal wall 38 at the lower side Z2 is bent to the lower side Z2. A screw hole 38B is formed in each flange portion 38A. An accommodating space 30A is formed in the base portion 30, which is surrounded by the vertical wall 37 and a pair of upper and lower horizontal walls 38. In the accommodating space 30A, the supporting portion 31, the linear motor 32 and the sensor 36 are accommodated.

The base portion 30 is disposed between the side plate 13 on the left side X1 of the supporting member 4 and the washing tub 3, and a pair of upper and lower flange portions 38A are provided to face to a peripheral portion of the opening 13A in the side plate 13 on the left side X1 from the right side X2 (see FIG. 1). The bolt 39 (see FIG. 1) assembled to the side plate 13 on the left side X1 is also assembled in the screw hole 38B of each flange portion 38A, whereby the base portion 30 is fixed to the side plate 13 on the left side X1. The accommodating space 30A of the base portion 30 is exposed from the side plate 13 on the left side X1 to the left side X1 via the opening 13A (see FIG. 1).

On the horizontal wall 38 at the upper side Z1, a guide groove 38C is formed in a portion at the right side X2 of the flange portion 38A. The guide groove 38C is formed with a groove shape elongated linearly in the front-rear direction Y. In this embodiment, the guide groove 38C is formed to penetrate the horizontal wall 38 at the upper side Z1 in the vertical direction Z, but it may also be a recessed portion which does not penetrate the horizontal wall 38 and is recessed to the upper side Z1. In order to reduce the weight of the entire base portion 30, an opening 30B is formed in the base portion 30 to continuously cut off a portion of the horizontal wall 38 at the upper side Z1 closer to the right side X2 than the guide groove 38C and the upper end part of the vertical wall 37.

One supporting portion 31 is provided for each of the front end part and the rear end part of the vertical wall 37, and each supporting portion 31 is formed in a substantially rectangular block shape protruding from the left side surface of the vertical wall 37 to the left side X1. The supporting portion 31 may be hollow, and each supporting portion 31 is fixed to the vertical wall 37 by bolts or the like.

The linear motor 32 includes a stator 41 and a rotor 42. The stator 41 is formed in a shaft shape extending in a predetermined direction S. The predetermined direction S in this embodiment is a linear direction intersecting with the rotation direction K of the washing tub 3 when viewed from the left-right direction X. Specifically, it refers to the front-rear direction Y (see FIG. 2). The stator 41 has a core 43 with a cylindrical shape extending linearly in a predetermined direction S as its main body portion, and a coil 44.

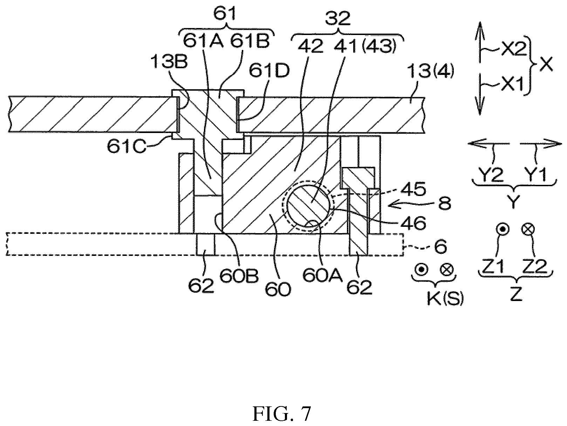

The core 43 is made of metal, is arranged between the left end part of a pair of front and rear support portions 31, and is fixed to the vertical wall 37 of the base portion 30 by being supported by both ends of pair of front and rear support portions 31. Since the base portion 30 is fixed to the supporting member 4 (see FIG. 1), the stator 41 is fixed to the supporting member 4 through the base portion 30. The coil 44 is, for example, a copper wire, and is wound spirally around the region between both end portions in the predetermined direction S on the outer peripheral surface of the core 43. The coil 44 passes through the interior of one of the support portions 31 and is electrically connected to a power source (not shown) in the washing machine 1. It should be noted that, the stator 41 may be cooled by supplying a coolant such as the air or the liquid to the hollow portion of the core 43. It should be noted that, for the convenience of explanation, the illustration of the coil 44 in FIG. 5 is omitted (FIG. 7 to be described later relates to the same case).

The rotor 42 integrally includes a main body portion 50, a connecting portion 51, a guide portion 52, and a detected portion 53. The main body portion 50 is, for example, formed in a substantially rectangular block shape elongated in the front-rear direction Y. In the main body portion 50, a insertion hole 50A with a circular shape penetrating the main body portion 50 in the front-rear direction Y is formed. A ring-shaped permanent magnet 45 (see FIG. 5) surrounding the insertion hole 50A is provided in the main body portion 50. The stator 41 is inserted into the insertion hole 50A with a slight play, so that the rotor 42 is fitted to the stator 41. In such a state, due to the repulsive force generated between the stator 41 and the permanent magnet 45 of the rotor 42, slight gaps 46 are formed at the inner circumferential surface 50B that defines the insertion hole 50A in the main body portion 50, at the portion of the outer peripheral surface 41A that is inserted in the inner circumferential surface 50A and the over the entire region in the circumferential direction of the inner peripheral surface 50B (see FIG. 5). Therefore, the stator 41 and the rotor 42 are not in contact with each other. Thus, the rotor 42 fitted with the stator 41 in a non-contact state is movable with respect to the stator 41 along the predetermined direction S as the stator 41 extends in a region of the stator 41 where the coil 44 exists between the pair of support portions 31.

The connecting portion 51 is formed in a cylindrical shape protruding from the front region on the left side surface of the main body portion 50 to the left side X1. A groove 51B extending along the circumferential direction of the outer peripheral surface 51A is formed at the left end part of the outer peripheral surface 51A of the connecting portion 51. The groove 51B is provided over the entire region in the circumferential direction of the outer peripheral surface 51A. The left end part of the connecting portion 51 is inserted into the guide hole 6E of the extending portion 6D of the rotating portion 6 from the right side X2 (see FIG. 1). The portion bordering the guide hole 6 in the extending portion 6D is in a state of being fitted into the groove 51B with slight play (see FIG. 5). As a result, the connecting portion 51 cannot be disengaged from the guide hole 6E, and the rotor 42 is connected to the rotating portion 6 via the connecting portion 51 and is also connected to the washing tub 3 via the rotating portion 6.

In the linear motor 32, when a voltage is applied from the power source (not shown) to the stator 41 and currents flow through the coil 44, a magnetic field is generated around the coil 44. An attracting force or a repulsive force generated between the magnetic field and the permanent magnet 45 of the rotor 42 serves as a driving force, so that the entire rotor 42 moves along the predetermined direction S, that is, along the front-rear direction Y. As a result, the rotating portion 6 is pulled along the front-rear direction Y by the rotor 42, whereby it rotates with the washing tub 3. By changing the value of the voltage applied to the stator 41, the amount of movement of the rotor 42 in the predetermined direction S and the direction in which the rotor 42 moves along the predetermined direction S can be changed. Thus, the washing tub 3 is enabled to be freely rotated at both sides in the rotation direction K, and the rotation angle θ of the washing tub 3 can be changed. The value of the voltage to be applied to the stator 41 is adjusted by a control part (not shown) constituted by a microcomputer or the like in the washing machine 1. When the rotating portion 6 rotates, the connecting portion 51 of the rotor 42 moves along the longitudinal direction of the guide hole 6E within the guide hole 6E.

In such a way, when the stator 41 extends linearly in the predetermined direction S as described above, the linear motor 32 converts the force in the predetermined direction S for linearly moving the rotor 42 into the force in the rotation direction K, and transmits the force to the washing tub 3. As a result, the washing tub 3 can be smoothly rotated.

Referring to FIG. 5, the guide portion 52 is formed in a thin plate shape in the left-right direction X and protrudes from the main body portion 50 to the upper side Z1. Grooves 52A linearly extending in the predetermined direction S, that is, the front-rear direction Y, are formed at the upper end parts of the left side surface and the right side surface of the guide portion 52. The upper end part of the guide portion 52 is fitted from the lower side Z2 with slight play into the guide groove 38C of the horizontal wall 38 on the upper side Z1 in the base portion 30. A portion of the horizontal wall 38 that borders the guide groove 38C from the left-right direction X is in a state of being fitted in the groove 52A of the guide portion 52. As a result, the movement of the rotor 42 along the predetermined direction S is guided.

The detecting portion 53 is formed in a thin plate shape at the left-right direction X, and integrally includes a fixing portion 53A and a top end portion 53B. The fixing portion 53A protrudes from the main body portion 50 to the lower side Z2. The top end portion 53B is formed so as to extend from the fixing portion 53A to the front side Y1 (also see FIG. 3).

A sensor 36 is a sensor for detecting the rotation angle θ of the washing tub 3 from a position of the rotor 42 in the front-rear direction Y. As the sensor 36, an optical sensor such as a photosensor can be adopted. In the case in which the sensor 36 is a photosensor, a groove 36A penetrating the sensor 36 in the front-rear direction Y is formed on the left side surface of the sensor 36, and the sensor 36 is in a state in which the detection light crosses the groove 36A in the vertical direction Z. The number of the sensors 36 is same with the number of the recessed portions 6C of the rotating portion 6. That is, there are five sensors in this embodiment, and they are arranged at the lower side of the vertical wall 37 of the base portion 30 along the front-rear direction Y in a manner in which the respective grooves 36A overlap when viewed from the front-rear direction. Each sensor 36 is fixed to the vertical wall 37 by a bolt 56. The interval between the adjacent sensors 36 is set so as to correspond to the interval between the adjacent recessed portion 6C. Therefore, in this embodiment, the interval between the adjacent sensors 36 in the four sensors 36 on the rear side Y2 is constant, but the interval between the two sensors 36 located at the frontmost side Y1 and the next most adjacent one is narrower than the distance between the other adjacent sensors 36 (see FIG. 4).

As described above, when the rotor 42 moves along the front-rear direction Y, the top end portion 53B of the detected portion 53 provided on the rotor 42 passes through the groove 36A of each of the sensors 36. In a state in which the top end portion 53B is fitted into the groove 36A, a detection light in the groove 36A is blocked by the top end portion 53B.

As shown in FIG. 3, in a state in which the top end portion 53B of the detected portion 53 is fitted into the groove 36A of the sensor 36 at the frontmost side Y1, as shown in FIG. 2, the locking claw 18 and the recessed portion 6C at the lowermost side Z2 are located at a same position in the rotation direction K, and the rotation angle θ of the washing tub 3 is 5 degrees. On the other hand, in a state in which the top end portion 53B of the detected portion 53 is fitted into the groove 36A of the sensor 36 on the rear side Y2, the locking claw 18 and the recessed portion 6C at the uppermost side Z1 in Fig. 2 are located at a same position in the rotation direction K, and the rotation angle θ of the washing tub 3 is 60 degrees. When the rotation angle θ is any one of 5 degrees, 15 degrees, 30 degrees, 45 degrees, and 60 degrees, the top end portion 53B of the detected portion 53 is fitted into the groove 36A of one of the sensors 36.Therefore, the five sensors 36 detect whether the rotation angle θ is one of 5 degrees, 15 degrees, 30 degrees, 45 degrees and 60 degrees.

As a comparative example with respect to the driving mechanism 8 described above, a nut member including a screw shaft extending in a predetermined direction S and the screw shaft connected to a screw thread is connected with the rotating portion 6, and a structure of a motor for rotating the screw shaft can be considered. In the comparative example, the nut member moves along the axial direction of the screw shaft as the rotation of the screw shaft driven by the motor. At this time, the rotating portion 6 is pulled by the nut member and rotates with the washing tub 3. In the comparative example, abrasions of screw thread portions engaging with each other in the nut member and the screw shaft are assumed. Further, the motor for rotating the screw shaft is relatively heavy. Thus, when the driving mechanism 8 is provided only on the side plate 13 at the left side X1 of the supporting member 4, a left-right weight balance of the entire body of the washing tub 3 and the supporting member 4 elastically supported by the hanger rod 5 can be easily damaged. This may increase the vibration of the washing tub 3 and the supporting member 4 during the dehydration step or the like. Furthermore, due to this vibration, there is a possibility that the screw shaft and the screw thread portions engaged with each other in the nut member may be damaged. In addition, in the comparative example, the screw shaft, the nut member and the motor are required, and a coupling for connecting the output shaft of the motor to the screw shaft and a bearing for rotatably supporting the screw shaft are also required. Thus, the increase on the number of components is definitely required. In addition, abrasions may occur also around the coupling and between the screw shaft and the bearing.

However, in the present embodiment, the driving mechanism 8 for rotating the washing tub 3 is constituted by the linear motor 32. In the linear motor 32, the stator 41 is always in a stationary state, and the rotor 42 moves along the predetermined direction S in a non-contact state with respect to the stator 41. That is, in the driving mechanism 8, the rotor 42 which is the only moving part does not slide with respect to the surrounding parts. As a result, abrasion of the stator 41 and the rotor 42 caused by the movement of the rotor 42 can be suppressed. Further, since the vibration of the washing tub 3 is absorbed by the gap 46 (see FIG. 5) between the rotor 42 and the stator 41, the damages occurring to the coupling portion between the rotor 42 and the stator 41 due to the vibrations can be prevented from being suppressed. Therefore, the failure of the driving mechanism 8 can be suppressed, and the labor involved in maintenance can be reduced.

Further, since the motor in the comparative example can be omitted by adopting the driving mechanism, it is difficult to destroy the left and right weight balance on the whole washing tub 3 and the supporting member 4. Therefore, it is possible to reduce the vibrations of the washing tub 3 and the supporting member 4 in the dehydration step or the like. Since the number of constituent parts may be reduced as the driving mechanism 8 is adopted in comparison with the comparative example, thereby cost reduction and size reduction can be achieved.

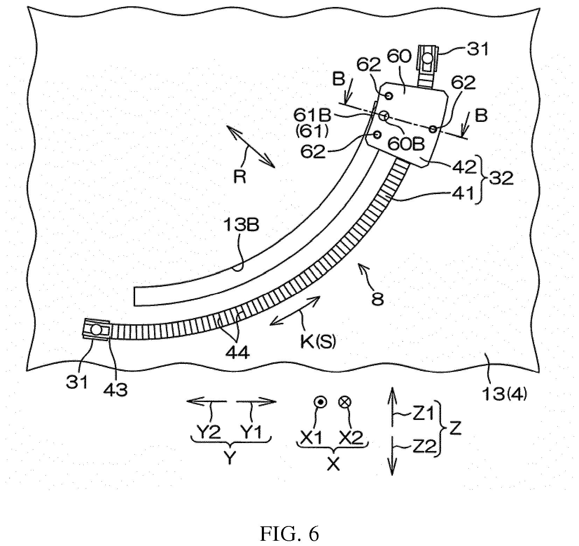

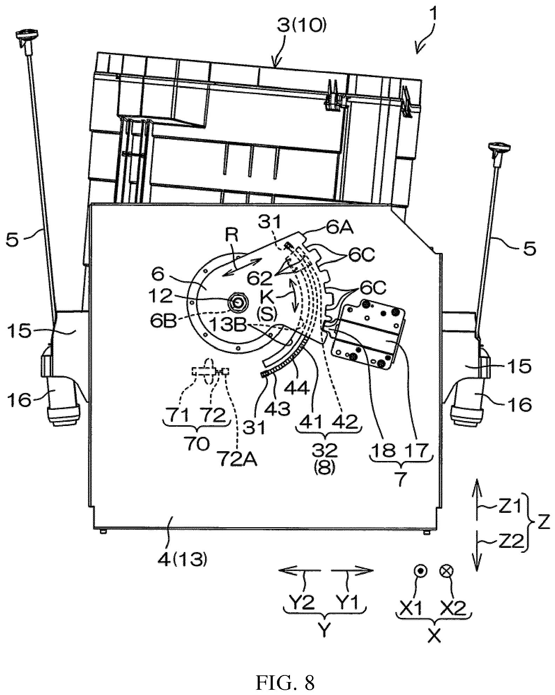

FIG. 6 is a left side view of the driving mechanism 8 included in the washing machine 1 according to the first modified example. FIG. 7 is a cross-sectional view taken along the line B-B in FIG. 6. FIG. 8 is a schematic left side view of the washing machine 1 according to the first modified example. In FIG. 6 and the subsequent figures, portions having the same functions and configurations as the parts described in FIGS. 1 to 5 are denoted by the same reference numerals, and the descriptions of the portions may be omitted.

Referring to FIG. 6 in which the periphery of the side plate 13 on the left side X1 is illustrated with the rotating portion 6 is omitted, the driving mechanism 8 according to the first modified example includes a pair of supporting portions 31 and a linear motor 32, but does not include the base portion 30. These supporting portions 31 are provided directly on the left side surface of the side plate 13 on the left side X1, and are spaced apart from each other in the rotation direction K at a position in the radial direction R slightly shifted from the outer peripheral edge 6A of the rotating portion 6 toward the through hole 6 B side (see FIG. 8). Each of the support portions 31 is formed in a substantially rectangular block shape protruding from the left side surface of the side plate 13 on the left side X1 to the left side X1.

The linear motor 32 constituting the driving mechanism 8 according to the first modified example is disposed between the side plate 13 on the left side X1 and the rotating portion 6 (see FIG. 7). In the linear motor 32, the stator 41 extends in a curved manner along the rotation direction K. In other words, the predetermined direction S, which is the direction in which the stator 41 extends, is a direction curved along the rotation direction K, and is the same as the rotation direction K. The iron core 43 around which the coil 44 is wound in the stator 41 also extends in a curved manner along the rotation direction K. The stator 41 is installed between the left end portions of the pair of support portions 31 and thereby fixed to the side plate 13 on the left side X1 of the supporting member 4 via the supporting portion 31.

Referring to FIG. 7, the rotor 42 includes a main body portion 60 and a guiding roller 61. For example, the main body portion 60 is formed in a substantially rectangular block shape. In the main body portion 60, a circular insertion hole 60A that penetrates the main body portion 60 along the rotation direction K is formed, and a ring-shaped permanent magnet 45 that surrounds the insertion hole 60A is provided therein. The stator 41 is inserted into the insertion hole 60A with a slight play, whereby the rotor 42 is fitted with the stator 41 in a non-contact state. Therefore, the aforementioned gap 46 is formed between the rotor 42 and the stator 41 in the insertion hole 60A. A through hole 60B penetrating the main body portion 60 in the left-right direction X is formed at a position avoiding the insertion hole 60A in the main body portion 60. The rotor 42 is provided between the side plate 13 on the left side X1 and the rotating portion 6. The rotor 42 is connected to the rotating portion 6 by a bolt 62 assembled from the right side X2 with respect to the rotor 42.

The guiding roller 61 integrally includes a shaft portion 61A with a columnar shape elongated in the lateral direction X and a cylindrical portion 61B coaxially connected to the right end part of the shaft portion 61A. The shaft portion 61A is inserted into the through hole 60B of the main body portion 60 from the right side X2. As a result, the guiding roller 61 is supported by the main body portion 60 in a state of being rotatable around the shaft portion 61A. The cylindrical portion 61B has a larger diameter compared with the shaft portion 61A, and a groove 61D extending along the circumferential direction of the outer peripheral surface 61C is formed on the outer peripheral surface 61C of the cylindrical portion 61B. The groove 61D is provided over the entire region in the circumferential direction of the outer peripheral surface 61C. In relation to the guiding roller 61, a guide groove 13B with a circular arc shape along the rotation direction K is formed on the side plate 13 on the left side X1 and on the rear side Y2 from the stator 41 (also see FIG. 6). The guide groove 13B penetrates the side plate 13 on the left side X1 along the left-right direction X. The right end part of the cylindrical portion 61B is inserted from the left side X1 into the guide groove 13B. A portion of the side plate 13 that borders the guide groove 13B is in fitted in the groove 61D of the cylindrical portion 61B. As a result, the guiding roller 61 cannot be disengaged from the guide groove 13B.

Referring to FIG. 8, in the linear motor 32 according to the first modified example, a voltage is applied to the stator 41, and thus, currents flow through the coil 44. The rotor 42 moves on the stator 41 along the predetermined direction S, which is curved along the rotation direction K. Along with this, the rotating portion 6 connected to the rotor 42 rotates with the washing tub 3. It should be noted that, when the washing tub 3 rotates, the guiding roller 61 (see FIG. 7) of the rotor 42 moves in the predetermined direction S while rotating in the guide groove 13B of the side plate 13. Thus, the movement of the rotor 42 along the predetermined direction S is guided. In the first modified example, the above-described locking portion 7 is also provided. Therefore, when the rotation angle θ is any one of 5 degrees, 15 degrees, 30 degrees, 45 degrees, and 60 degrees, the locking claw 18 advances to the advanced position and fits into the recessed portion 6C, and the rotations of the rotating portion 6 and the washing tub 3 are locked. In this state, when the locking claw 18 retreats to the retracted position, the locking claw 18 is disengaged from the recessed portion 6C, so that the locking of the rotating portion 6 and the washing tub 3 is released.

In the case in which the stator 41 extends in the predetermined direction S curved along the rotation direction K in the first modified example, the linear motor 32 directly transmits a force to the washing tub 3 without changing a force for moving the rotor 42 in a circular arc to a rotation direction K into a force in another direction so that the washing tub 3 can be smoothly rotated. In the case of the first modified example, the base portion 30 (see FIG. 3) and the like can be omitted, and the extension portion 6D (see FIG. 2) can be omitted in the rotating portion 6. As a result, the left and right weight balance of the entire body of the washing tub 3 and the supporting member 4 cannot be easily damaged. Therefore, vibrations of the washing tub 3 and the supporting member 4 in the dehydration step and the like can be further reduced. Further, in the driving mechanism 8 of the first modified example, it is possible to further reduce the number of constituent parts, so that it is possible to further reduce the cost and the size while securing the torque necessary for rotating the washing tub 3.

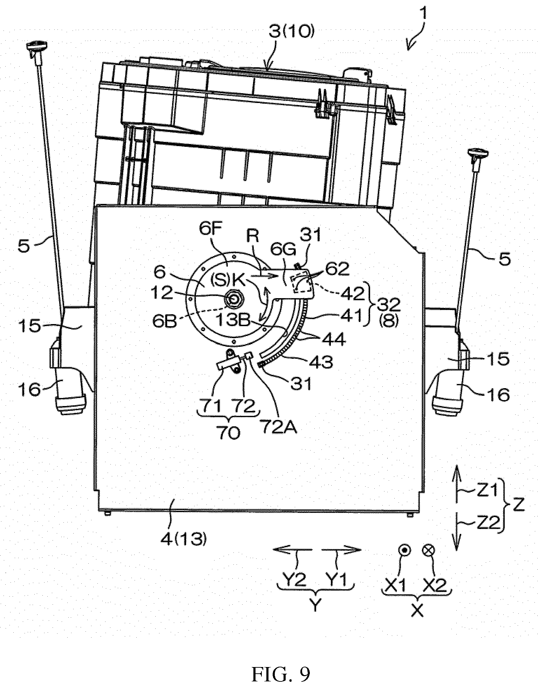

FIG. 9 is a schematic left side view of the washing machine 1 according to the second modified example. In the washing machine 1 of the second modified example, as same with the first modified example, in the linear motor 32, the stator 41 extends in a curved manner along the rotation direction K. The rotor 42 moves on the stator 41 along the rotation direction K, and the predetermined direction S is bent along the rotation direction K.

In the linear motor 32, for example, by continuously applying a voltage of a predetermined value equivalent to the standby voltage to the stator 41, the position of the rotor 42 in the predetermined direction S on the stator 41 can be maintained. Therefore, as shown in the second modified example of FIG. 9, even if the above-described locking portion 7 is omitted, the rotations of the rotating portion 6 and the washing tub 3 are still locked. Thus, the rotation angle θ can be adjusted in a stepless manner. In a state that the rotations of the rotating portion 6 and the washing tub 3 are locked, when the value of the voltage applied to the stator 41 is changed from the predetermined value, the locking of the rotating portion 6 and the washing tub 3 is released, and the rotor 42 moves on the stator 41 along the predetermined direction S. That is, the linear motor 32 itself has the function of the locking portion 7.

In the washing machine 1 of the second modified example, the above-described recessed portion 6C is omitted in the rotating portion 6 as the lock part 7 is omitted. Therefore, the rotating portion 6 is simply formed in a manner with a disk portion 6F and a fixing portion 6G included, the disk portion 6F has a through hole 6B at the center of the circle therein, and the fixing portion 6G protrudes outward in the radial direction R from one circumference of the disk portion 6F and is fixed with the rotor 42. As a result, the driving mechanism 8 in the second modified example becomes more compact, so that it is possible to further reduce the cost and the size while ensuring the torque necessary for rotating the washing tub 3, and it may achieve simplification of structures relating to the rotation of the washing tub 3.

However, it may be assumed that, in the linear motor 32, when the applied voltage to the stator 41 is stopped by a power outage or the like, the rotor 42 cannot support the weights of the washing tub 3 and the rotating portion 6, and rapidly descends along the stator 41 toward in the gravity direction (the lower side Z2).Meanwhile, the washing tub 3 and the rotating portion 6 rotate in a manner that the rotation angle θ becomes large. Then, due to the impact of the rotations of the washing tub 3 and the rotating portion 6, following scenarios may occur: the rotor 42 may collide with the supporting portion 31 at the lower side Z2, or the guiding roller 61 of the rotor 42 collides with the edge of the lower side Z2 in the guide groove 13B of the side plate 13 on the left side X1. Due to the collision here, following defects may occur: the rotor 42 may be damaged, the guiding roller 61 is detached from the guide groove 13B, the rotating portion 6 is detached from the rotation shaft 12, or the supporting portion 31 and the side plate 13 are deformed.

Therefore, the washing machine 1 includes a damper portion 70. The damper portion 70 includes, for example, a main body portion 71 containing an elastic body such as a compressible fluid and a spring, and a receiving portion 72 with a shaft shape protruding from the main body portion 71 to the front side Y1. The receiving portion 72 is elastically supported by the main body portion 71. The front end part of the receiving portion 72 is a contact portion 72A with a cylindrical shape having a larger diameter. The contact portion 72A is substantially at a same position in the rotation direction K with the lower end of the supporting portion 31 and the guide groove 13B on the lower side Z2.

At the time before the rotor 42 suddenly descends and the guiding roller 61 reaches the lower end of the guide groove 13B as described above, the contact portion 72A elastically contacts the fixing portion 6G of the rotating portion 6 from the rear side Y2. As a result, the impact caused by the rotation of the washing tub 3 and the rotating portion 6 is absorbed. It should be noted that, the arranging position of the damper portion 70 can be arbitrarily changed. In the above description, the contact portion 72A of the damper portion 70 is disposed at a position where the contact portion 72A of the damper portion 70 contacts a member interlocking with the rotation of the washing tub 3, i.e. the rotating portion 6, in the washing machine 1. However, the damper portion 70 may be installed on the right side surface of the side plate 13 at the left side X1, for example, and the contact portion 72A directly contacts the washing tub 3 to absorb the impact caused by the rotation of the washing tub 3.

In this way, the contact portion 72A of the damper portion 70 contacts the rotating portion 6 or the washing tub 3, thereby absorbing the impact caused by the rotation of the washing tub 3. Thus, it is possible to prevent failures caused by the impact from occurring to the members related to the rotation of the washing tub 3 in the washing machine 1, such as the rotor 42, the supporting portion 31 and the side plate 13. In a state in which the rotation of the washing tub 3 is stopped, the rotation of the washing tub 3 is stopped by bringing the damper portion 70 into contact with the washing tub 3 or the members without energizing the linear motor 32, and the above state can be maintained. Therefore, the power consumption can be suppressed. It should be noted that, the damper portion 70 can be applied to the washing machine 1 according to all the embodiments described above regardless of the third modified example (see FIGS. 2 and 8).

The present disclosure is not limited to the embodiments described above, and various modifications are possible within the scope described in the claims.

For example, in the linear motor 32 of the above-described embodiment, the stator 41 has a coil 44, and the rotor 42 has a permanent magnet 45. However, as a reverse structure, the stator 41 may have a permanent magnet 45, and the rotor 42 may have a coil 44. In short, in the linear motor 32, it suffices that the stator 41 has one of the coil 44 and the permanent magnet 45 and that the rotor 42 has the other one of the coil 44 and the permanent magnet 45. However, when the stator 41 has the permanent magnet 45 and the rotor 42 has the coil 44, an electric wire for applying a voltage from the power source (not shown) to the coil is connected to the rotor 42. It is necessary to move the electric wire together with the rotor 42. In this case, it is necessary to arrange the electric wires so as not to be disconnected by being sandwiched or in contact with surrounding parts. Therefore, if disconnection is taken into consideration, preferably, the stator 41 has the coil 44, and the rotor 42 has the permanent magnet 45, which relates to the same case as that of the linear motor 32 in the above-described embodiment.

Further, in the embodiment described above, the rotor 42 of the linear motor 32 is connected to the washing tub 3 via the rotating portion 6, but it may be directly connected to the washing tub 3.

## Claims

1. A washing machine, comprising:
a washing tub for accommodating laundry and being rotatable in a manner of intersecting with a vertical direction;
a supporting member for rotatably supporting the washing tub, and
a linear motor having a stator and a rotor and for rotating the washing tub by means of a movement of the rotor, wherein
the stator has one of a coil and a permanent magnet, is fixed to the supporting member and
extends in a predetermined direction; and
wherein the rotor has another of the coil and the permanent magnet, is fitted with the stator in a non-contact state so as to be movable along the predetermined direction, and is connected to the washing tub.

2. The washing machine according to claim 1, wherein the predetermined direction is a linear direction that intersects a rotation direction of the washing tub.

3. The washing machine according to claim 1, wherein the predetermined direction is a direction curved along a rotation direction of the washing tub.

4. The washing machine according to any one of claims 1 to 3, comprising:
a locking portion for locking a rotation of the washing tub or releasing the locking thereof.

5. The washing machine according to any one of claims 1 to 4, comprising: a damper portion that absorbs an impact caused by rotation of the washing tub by means of contacting with the washing tub or a member interlocking with the rotation of the washing tub in the washing machine.
